# EUROPÄISCHE PATENTSCHRIFT

(11) **EP 2 475 248 B1**
(45) Veröffentlichungstag und Bekanntmachung des Hinweises auf die Patenterteilung: **20.08.2014**
(21) Anmeldenummer: 10784964.8
(22) Anmeldetag: 04.09.2010
(51) Int. Cl.: A01N 25/10, A01N 25/30, A01N 25/20, A01N 57/20, A01P 13/00

(54) **WÄSSERIGE PESTIZIDZUSAMMENSETZUNGEN ENTHALTEND COPOLYMERE UND AMPHOTERE OBERFLÄCHENAKTIVE SUBSTANZEN**
AQUEOUS PESTICIDE COMPOSITIONS CONTAINING COPOLYMERS AND AMPHOTERIC SURFACE-ACTIVE COMPOUNDS
COMPOSITIONS PESTICIDES CONTENANT DES COPOLYMERES ET DES AGENTS TENSIO-ACTIFS AMPHOTERIQUES

(30) Priorität: 10.09.2009 DE 102009041003
(43) Veröffentlichungstag der Anmeldung: 18.07.2012
(73) Patentinhaber: Clariant Finance (BVI) Limited, Road Town, Tortola (VG)
(72) Erfinder: WACKER, Andreas, 68163 Mannheim (DE)
(74) Vertreter: Paczkowski, Marcus
(86) Internationale Anmeldenummer: PCT/EP2010/005444
(87) Internationale Veröffentlichungsnummer: WO 2011/029561

(56) Entgegenhaltungen:
- US-A1- 2005 037 926
- US-B1- 6 500 784
- US-B1- 6 645 912

## Beschreibung

Die Erfindung betrifft wässerige, lagerstabile Pestizidezubereitungen enthaltend: a) mindestens ein Pestizid ausgewählt aus der Substanzklasse N-Phosphonomethylglycin, b) ein oder mehrere Copolymere, erhältlich durch Copolymerisation von i) Glycerin, ii) mindestens einer Dicarbonsäure und iii) mindestens einer Monocarbonsäure und ein oder mehrere amphotere oberflächenaktive Substanzen.

Pestizide (Akarizide, Bakterizide, Fungizide, Herbizide, Insektizide, Molluskide, Nematizide und Rodentizide) sind chemische oder natürliche Substanzen, die in Pflanzenzellen, -gewebe oder parasitären Organismen in oder auf der Pflanze eindringen und diese schädigen und/oder zerstören.

Den größten Anteil an Pestiziden stellen Herbizide dar, gefolgt von Insektiziden und Fungiziden.

Die wichtigsten Herbizide sind chemische Substanzen, die auf das Transportsystem von Pflanzen, beispielsweise durch eine Hemmung von Photosynthese, Fettsäurebiosynthese oder Aminosäurebiosynthese, einwirken und zur Hemmung von Keimbildung und Wachstum bis zum Absterben der Pflanze führen.

Bekannte Herbizide sind beispielsweise Herbizide der Substanzklasse N-Phosphonomethyl-glycin (Glyphosate). Glyphosate werden als sehr umweltverträgliche und gleichzeitig hochwirksame und breit einsetzbare Herbizide in der Agrarwirtschaft in großen Mengen eingesetzt. Sie werden vorzugsweise als wasserlösliche Salze, beispielsweise als Alkalimetall-, Ammonium-, Monoalkyl- oder Dialkylammonium-, Mono-, Di- oder Triethanolammonium, Alkylsulfonium- oder Alkylphosphoniumsalz sowie in Form von Gemischen dieser Salze als wässrige Formulierungen, aber auch in fester Form auf Blätter und Gräser aufgebracht, wo sie auf das Transportsystem der Pflanze einwirken und diese vernichten.

Die biologische Aktivität eines Pestizides kann anhand des Pflanzenwachstums bzw. der Schädigung der Pflanzen durch die Einwirkung des Wirkstoffes auf das Blatt oder über die Wurzeln in Abhängigkeit von der Wirkzeit und der Wirkkonzentration bestimmt werden.

Ein generelles Problem ist, dass nur ein Bruchteil des Wirkstoffes die gewünschte Aktivität entfaltet. Der bei weitem größte Teil geht ungenutzt verloren, indem der Wirkstoff bei der Ausbringung der Spritzbrühe nicht die Blätter oder Wurzeln der Pflanze erreicht und ungenutzt im Boden versickert, durch Regen abgewaschen oder nicht von der Pflanze aufgenommen wird.

Dieser ökologische und ökonomische Nachteil kann durch Zugabe von Hilfsstoffen (Adjuvants) zu Pestizid-Formulierungen reduziert werden. Diese Hilfsstoffe können beispielsweise Spray-Drift reduzieren, die Benetzung der Pflanze verbessern oder dafür sorgen, dass der Wirkstoff länger auf der Pflanzenoberfläche haftet bzw. besser aufgenommen wird. Insbesondere bei Glyphosat-Formulierungen hat die Art sowie die Menge des verwendeten Adjuvants einen entscheidenden Einfluss auf die Wirksamkeit der Formulierung.

Vielfach verwendete Adjuvants in Glyphosat-Formulierungen sind Fettaminethoxylate, hauptsächlich Talgfettaminethoxylate und Alkyletheraminethoxylate (EP 0 290 416, US 5,750,468). Diese Verbindungen sind jedoch aufgrund ihrer öko-toxikologischen Eigenschaften, insbesondere ihrer Wirkung auf aquatische Organismen, als nicht unbedenklich einzustufen.

EP 1 379 129 und WO 03/000055 beschreiben Pestizidzubereitungen, die ein Copolymer aus Glycerin, einer Carbonsäure und einer Dicarbonsäure als Adjuvant enthalten. Diese Copolymere erhöhen die Wirkung der Pestizide auf signifikante Weise und zeichnen sich durch ihre niedrige Toxizität und hohe Umweltverträglichkeit aus.

Nachteilig bei der Verwendung dieser Copolymere in wässrigen Pestizidzubereitungen ist die nicht ausreichende Lagerstabilität bei höheren Temperaturen, vor allem wenn die Copolymere nur in relativ geringer Menge in der Zubereitung enthalten sind.
Als weiterhin nachteilig bei der Verwendung dieser Copolymere ist die hohe Viskosität der Pestizidzubereitungen anzusehen, vor allem wenn es sich um hochbeladene Formulierungen mit einem hohen Gehalt an Aktivsubstanz handelt. Die Verwendung von amphoteren Tensiden wie Alkylbetainen, Alkyl(amidoalkyl)-betainen oder Aminoxiden als Adjuvants in Pestizidzubereitungen wie beispielsweise in Glyphosat-Formulierungen ist bekannt.

WO 97/36491 beschreibt die Verwendung von Aminoxiden als Adjuvants in Glyphosat-Formulierungen.

WO 00/38523 beschreibt die Verwendung von amphoteren Tensiden in Kombination mit Ethercarboxylaten als Adjuvants in Glyphosat-Formulierungen, wobei es sich bei den amphoteren Tensiden um Betaine mit besonders geringem Gehalt an Natriumchlorid handelt, die nur aufwendig und dementsprechend teuer herzustellen sind.

Eine ähnliche Zusammensetzung wird in WO 01/08482 beschrieben, wobei Alkylamidoaminoxide als amphoteres Tensid in Kombination mit Ethercarboxylaten als Adjuvants in Glyphosat-Formulierungen eingesetzt werden.

WO 03/063589 beschreibt die Verwendung von Alkylbetainen oder Alkyl(amidoalkyl)-betainen in Kombination mit verschiedenen anderen Additiven wie Fettaminethoxylaten in Glyphosat-Formulierungen.

Ein Nachteil dieser Adjvuants ist, dass sie aufgrund ihres Herstellungsprozesses lediglich als verdünnte wässrige Lösungen zur Verfügung stehen, die üblicherweise 30 - 35 Gew.-% an Aktivsubstanz enthalten. Zudem können diese Lösungen (wie im Falle der Alkylbetaine) beträchtliche Mengen an Salzen wie Natriumchlorid, das als Nebenprodukt bei der Herstellung anfällt, enthalten, was sich meist negativ auf die Stabilität der Pestizid-Formulierung auswirkt.

Der geringe Aktivgehalt der amphoteren Tensidlösungen hat zudem den Nachteil, dass große Mengen an Wasser transportiert werden müssen, was unökonomisch ist.
Besonders im Fall von hochkonzentrierten Pestizid-Zubereitungen, wie Glyphosat-Formulierungen, führt der geringe Aktivgehalt an amphoterem Tensid verbunden mit dem hohen Wasseranteil außerdem dazu, dass der Formulierung keine ausreichend große Menge an Adjuvant zugesetzt werden kann.

Glyphosat-Formulierungen werden üblicherweise aus hochkonzentrierten wässrigen Lösungen der Glyphosat-Salze hergestellt, die zwangsweise signifikante Mengen Wasser enthalten. Die Formulierung wird durch Vermischen mit dem Adjuvant und gegebenenfalls weiteren Hilfsstoffen hergestellt. Je mehr Wasser während dieses Prozesses zusätzlich in die Formulierung gebracht wird, desto weniger Adjuvant und andere Hilfsstoffe kann die Formulierung schließlich enthalten. Bei den amphoteren Tensiden kann der Fall eintreten, dass, um die gewünschte Glyphosat-Konzentration einhalten zu können, lediglich eine sub-optimale Menge an Adjuvant zugesetzt werden kann, was die Wirksamkeit der Formulierung reduziert. Zudem sind die amphoteren Tenside toxikologisch nicht unbedenklich, da sie als stark augenreizend einzustufen sind.

Es stellte sich die Aufgabe, neue hochwirksame wässrige Pestizidzubereitungen enthaltend mindestens ein Pestizid ausgewählt aus der Substanzklasse N-Phosphonomethylglycin zu entwickeln, die auch in Form von lagerstabilen, niedrigviskosen, wässrigen Formulierungen dargeboten werden können und in toxikologischer, ökologischer und ökonomischer Sicht vorteilhaft sind.

Überraschenderweise wird die Aufgabe dadurch gelöst, dass die wässrige Pestizid-Zubereitung neben dem einen oder den mehreren Pestiziden eine Mischung enthält, die sich zusammensetzt aus einem oder mehreren Copolymeren, erhältlich durch Copolymerisation von Glycerin, mindestens einer Dicarbonsäure und mindestens einer Monocarbonsäure sowie einer oder mehreren amphoteren oberflächenaktiven Substanzen.

Durch die Verwendung dieser Mischung lassen sich lagerstabile Pestizidzubereitungen, enthaltend mindestens ein Pestizid ausgewählt aus der Substanzklasse N-Phosphonomethylglycin herstellen, die sich durch eine niedrige Viskosität, auch bei niedriger Temperatur auszeichnen.

Gegenstand der Erfindung sind Zusammensetzungen enthaltend
a) ein oder mehrere Pestizide, wobei mindestens ein Pestizid ausgewählt ist aus der Substanzklasse N-Phosphonomethylglycin (Glyphosat),
b) ein oder mehrere Copolymere, erhältlich durch Copolymerisation von
   i) Glycerin,
   ii) mindestens einer Dicarbonsäure und
   iii) mindestens einer Monocarbonsäure,
c) ein oder mehrere amphotere oberflächenaktive Substanzen und
d) Wasser,
dadurch gekennzeichnet, dass das Gewichtsverhältnis der einen oder mehreren Verbindungen der Komponente b) zu der einen oder mehreren Verbindungen der Komponente c) von 95 zu 5 bis 5 zu 95 beträgt.

Die Mischungen aus den Verbindungen ausgewählt aus den Komponenten b) und c) werden nachfolgend Adjuvantmischungen genannt.

Die Adjuvantmischungen aus den Komponenten b) und c) eignen sich als Adjuvant in den erfindungsgemäßen Pestizidzubereitungen zur Verbesserung der biologischen Aktivität von Pestiziden ausgewählt aus der Substanzklasse N-Phosphonomethylglycin Herbiziden. Die erfindungsgemäßen Pestizidzubereitungen können Insektizide, Fungizide, Akarizide, Bakterizide, Molluskide, Nematizide, Rodentizide und Herbizide enthalten.

Geeignete Herbizide sind, ohne die Erfindung auf diese einzuschränken, Amidherbizide wie Saflufenacil, Anilid-Herbizide wie Propanil, Chloracetanilid-Herbizide wie Acetochlor, Alachlor, Butachlor, Metolachlor, Sulfonanilidherbizide wie Florasulam, Metosulam, Sulfonamid-Herbizide wie Carbasulam, Penoxsulam, Pyroxsulam, Benzoesäureherbizide wie Dicamba, Tricamba, Picolinsäureherbizide wie Aminopyralid, Picloram, Benzoylcyclohexandion-Herbizide wie Mesotrione, Tembotrione, Benzofuranylalkylsulfonat-Herbizide wie Ethofumesat, Benzothiazolherbizide wie Benzthiazuron, Carbamat-Herbizide wie Asulam, Chlorprocarb, Fenasulam, Carbanilat-Herbizide wie Carbasulam, Carbetamid. Desmedipham, Phenmedipham, Cyclohexenoxim-Herbizide, wie Butroxydim, Dicarboximid-Herbizide wie Flumezin, Dinitroanilin-Herbizide wie Pendimethalin, Trifluralin, Dinitrophenol-Herbizide, wie Etinofen, Nitrophenylether-Herbizide wie Etnipromid, Nitrofen, Imidazolinonherbizide wie Imazapyr, Imazethapyr, Nitrilherbizide wie Bromoxynil, Pyraclonil, Organophosphorherbizide wie Anilofos, Glufosinat, Glyphosat, Oxadiazolon-Herbizide wie Dimefuron, Oxazolherbizide wie Topramezone, Phenoxyherbizide wie Etnipromid, Phenoxyacet-Herbizide wie MCPA, MCPA-thioethyl, Phenoxybuttersäure-Herbizide wie MCPB, Phenoxypropionsäure-Herbizide wie Dichlorprop, Fenoprop, Aryloxyphenoxypropionsäure-Herbizide, wie Clodinafop, Fenoxaprop, Quizalofop, Phenylenediaminherbizide wie Prodiamin, Pyrazolherbizide wie Difenzoquat, Metazachlor, Pyrazosulfuron, Benzoylpyrazol-Herbizide wie Topramezon, Phenylpyrazol-Herbizide wie Pinoxaden, Pyraflufen, Pyridazinon-Herbizide wie Oxapyrazon, Pyridinherbizide wie Aminopyralid, Diflufenican, Fluroxypyr, Picloram, Pyroxsulam, quartäre Ammoniumherbizide wie Diquat, Paraquat, Thiocarbamat-Herbizide wie Ethiolat, Methiobencarb, Thiobencarb, Thioharnstoffherbizide wie Methiuron, Indaziflam, Chlorotriazin- und Methoxytriazin-Herbizide wie Atrazin, Simazin, Simeton, Terbumeton, Methylthiotriazin-Herbizide wie Prometryn, Simetryn, Triazinonherbizide wie Hexazinon, Triazolherbizide wie Flupoxam, Triazolon-Herbizide wie Flucarbazon, Thiencarbazon, Triazolopyrimidin-Herbizide wie Flumetsulam, Metosulam, Phenoxsulam, Pyroxsulam, Uracilherbizide wie Butafenacil, Saflufenacil, Harnstoff- und Phenylharnstoff-Herbizide wie Benzthiazuron, Diuron, Isoproturon, Sulfonylharnstoff-Herbizide wie Amidosulfuron, Bensulfuron, Foramsulfuron, Halosulfuron, Mesosulfuron, Nicosulfuron, Oxasulfuron, Pyrazosulfuron, Rimsulfuron, Sulfosulfuron, Trifloxysulfuron, Triazinylsulfonyl-Harnstoff-Herbizide wie Chlorsulfuron, lodosulfuron, Metsulfuron.

Dabei kann es sich um einzelne Wirkstoffe oder um Kombinationen mehrerer Wirkstoffe handeln. Die Pestizidzubereitungen können beispielsweise als wässrige Lösungen (SL-Formulierungen), wässrige Suspensionen (SC-Formulierungen), Emulsionen in Wasser (EW-Formulierungen), Mikroemulsionen in Wasser (ME-Formulierungen) oder Suspoemulsionen in Wasser (SE-Formulierungen) vorliegen. Dabei ist es möglich, dass ein oder mehrere Wirkstoffe in Wasser gelöst oder suspendiert sind, während sich ein oder mehrere andere Wirkstoffe in einer nicht-wässrigen Phase befinden.

Unter den Glyphosaten sind die freie Säure und die wasserlöslichen Salze bevorzugt. Besonders bevorzugt ist das eine oder sind die mehreren Pestizide der Komponente a) ausgewählt aus wasserlöslichen Salzen des N-Phosphonomethyl-glycins (Glyphosats).

Unter den wasserlöslichen Salzen des Glyphosats sind wiederum die Alkalimetall-, Ammonium-, Monoalkyl- oder Dialkylammonium-, Mono-, Di- oder Triethanolammonium, Alkylsulfonium-, Alkylphosphonium, Sulfonylamin- oder Aminoguanidinsalze sowie Gemische dieser Salze bevorzugt. Hierbei bedeutet "Monoalkylammonium" besonders bevorzugt 'Isopropylammonium". Unter den Alkalimetallsalzen ist das Kaliumsalz besonders bevorzugt.

Bevorzugte Copolymere der Komponente b) sind erhältlich durch Copolymerisation von
i) Glycerin
ii) mindestens einer Dicarbonsäure und
iii) mindestens einer Monocarbonsäure gemäß Formel (I)

   R¹-COOH (I),

   wobei R¹ (C₅-C₂₉)-Alkyl; (C₇-C₂₉)-Alkenyl-, Phenyl oder Naphthyl ist,
und enthalten 19,9 bis 99 Gew.-% der Komponente i), 0,1 bis 30 Gew.-% der Komponente ii) und 0,9 bis 80 Gew.-% der Komponente iii).

Bevorzugte Dicarbonsäuren der Komponente ii) sind ausgewählt aus aromatischen Dicarbonsäuren. Besonders bevorzugte Dicarbonsäuren der Komponente ii) sind ausgewählt aus Phthalsäure, Terephthalsäure oder iso-Phthalsäure.

Bevorzugte Monocarbonsäuren der Komponente iii) sind ausgewählt aus Monocarbonsäuren der Formel (I) (Formel R¹-COOH), worin R¹ vorzugsweise eine Alkyl- oder Alkenylgruppe und besonders bevorzugt eine lineare Alkyl- oder Alkenylgruppe ist. Weiterhin bevorzugt besitzt R¹ in den Monocarbonsäuren der Formel (I), sofern es eine Alkyl- oder Alkenylgruppe ist, 8 bis 22 Kohlenstoffatome. Insbesondere bevorzugt sind die Monocarbonsäuren der Formel (I), worin R¹ ein Fettalkyl-Rest mit 8 bis 22 Kohlenstoffatomen ist. Außerordentlich bevorzugt sind die Monocarbonsäuren der Formel (I) ausgewählt aus Kokosfettsäure oder Talgfettsäure.

Die Herstellung der Copolymere der Komponente b) ist beispielsweise beschrieben in EP 1 379 129 und WO 03/000055.

Bevorzugte amphotere oberflächenaktive Substanzen der Komponente c) sind ausgewählt aus den Formeln (II) bis (V)
iv) Alkylbetain der Formel (II)

   R¹R²R³N⁺-CH₂-COO⁻ (II)

   worin R¹ eine lineare oder verzweigte Alkylgruppe mit 3 bis 30 Kohlenstoffatomen oder eine Mischung daraus ist, R² und R³ gleich oder verschieden sein können und Wasserstoff, eine Alkylgruppe mit 1 bis 10 Kohlenstoffatomen oder eine Gruppe der Formel (C₂H₄O)ₚH bedeuten und p eine Zahl von 1 bis 10 ist,
v) Alkyl(amidoalkyl)-betain der Formel (III)

   R¹-CONH-(CH₂)ₙN⁺R²R³-CH₂-COO⁻ (III)

   worin R¹ eine lineare oder verzweigte Alkylgruppe mit 3 bis 30 Kohlenstoffatomen oder eine Mischung daraus ist, R² und R³ gleich oder verschieden sein können und Wasserstoff, eine Alkylgruppe mit 1 bis 10 Kohlenstoffatomen oder eine Gruppe der Formel (C₂H₄O)ₚH bedeuten und n und p Zahlen von 1 bis 10 sind,
vi) Aminoxid der Formel (IV)

   R¹NR²R³⁺-O⁻ (IV)

   worin R¹ eine lineare oder verzweigte Alkylgruppe mit 3 bis 30 Kohlenstoffatomen oder eine Mischung daraus ist, R² und R³ gleich oder verschieden sein können und Wasserstoff, eine Alkylgruppe mit 1 bis 10 Kohlenstoffatomen oder eine Gruppe der Formel (C₂H₄O)ₚH bedeuten und p eine Zahl von 1 bis 10 ist,
vii) Aminoxid der Formel (V)

   R¹-CONH-(CH₂)ₙNR²R³⁺-O⁻ (V)

   wobei R¹ eine lineare oder verzweigte Alkylgruppe mit 3 bis 30 Kohlenstoffatomen oder eine Mischung daraus ist, R² und R³ gleich oder verschieden sein können und Wasserstoff, eine Alkylgruppe mit 1 bis 10 Kohlenstoffatomen oder eine Gruppe der Formel (C₂H₄O)ₚH bedeuten und n und p Zahlen von 1 bis 10 sind.

In den Verbindungen der Formeln (II), (III), (IV) und (V) sind die Reste R¹ vorzugsweise lineare Alkylgruppen. Weiterhin bevorzugt besitzt R¹ in den Verbindungen der Formeln (II), (III), (IV) und (V) 8 bis 22 Kohlenstoffatome. In den Verbindungen der Formeln (II), (III), (IV) und (V) sind R² und R³ vorzugsweise Alkylgruppen und besonders bevorzugt Alkylgruppen mit 1 bis 4 Kohlenstoffatomen. Insbesondere bevorzugt sind R² und R³ in den Verbindungen der Formeln (II), (III), (IV) und (V) Methylgruppen.

In den Gruppen (C₂H₄O)ₚH ist p vorzugsweise 1 bis 3.

In den Verbindungen der Formeln (III) und (V) ist n vorzugsweise 3.

Als amphotere oberflächenaktive Substanzen der Komponente c) sind Verbindungen der Formeln (II) und (V) bevorzugt. Unter den Verbindungen der Formel (II) sind diejenigen bevorzugt, worin R¹ Alkyl mit 8 bis 22 Kohlenstoffatomen, vorzugsweise lineares Alkyl mit 8 bis 22 Kohlenstoffatomen, ist und R² und R³ Methyl bedeuten. Unter den Verbindungen der Formel (V) sind diejenigen bevorzugt, worin R¹ Alkyl mit 8 bis 22 Kohlenstoffatomen, vorzugsweise lineares Alkyl mit 8 bis 22 Kohlenstoffatomen, ist, R² und R³ Methyl bedeuten und n 3 ist.

Die amphoteren oberflächenaktiven Substanzen der Formeln (II), (III), (IV) und (V) sind käuflich erwerbbar. Copolymere der Komponente b) sind ebenfalls kommerziell erhältlich.

Mit den oben beschriebenen Adjuvantmischungen aus den Komponenten b) und c) lassen sich wässrige Glyphosat-Formulierungen mit ausgezeichneter Lagerstabilität herstellen. Die Lagerstabilität ist dabei höher als bei Formulierungen, die lediglich die Komponente b) als Adjuvant enthalten. Der reizende und insbesondere der augenreizende Effekt wird im Vergleich zu Formulierungen, die lediglich die Komponente c) als Adjuvant enthalten, reduziert. Weitere anwendungstechnische Vorteile sind die niedrige Viskosität sowie das gute Löslichkeitsverhalten in Wasser.

Ein wichtiges Kriterium für die Lagerstabilität von Glyphosat-Formulierungen ist die Phasenstabilität. Dabei ist der sogenannte Trübungspunkt eine Messgröße für die Bestimmung der Phasenstabilität. Es handelt sich hierbei um die Temperatur, bis zu der eine wässrige Formulierung ohne Phasentrennung erwärmt werden kann. Bis zum Erreichen des Trübungspunktes liegen in der wässrigen Formulierung die Tenside und das Glyphosatsalz in definierten Konzentrationen als klare homogene Lösung vor. Beim Erwärmen auf Temperaturen oberhalb des Trübungspunktes trübt die zuvor transparente Formulierung zunächst ein, das Tensid trennt sich von der Lösung und beim Stehen lassen kommt es zur Phasenseparation. Der Trübungspunkt einer Zusammensetzung wird typischerweise bestimmt, indem man die Lösung bis zum Auftreten einer Trübung erwärmt. Im Anschluss daran lässt man die Zusammensetzung unter Rühren und stetiger Temperaturkontrolle abkühlen. Die Temperatur, bei der die eingetrübte Lösung wieder aufklart, wird als Messwert des Trübungspunkts dokumentiert.

Es ist bekannt, dass die Lagerstabilität von Glyphosat-Formulierungen durch Zusatz von Glykolen und Polyglykolen wie Ethylenglykol, Propylenglykol oder Polyethylenglykolen verbessert werden kann. Diese Verbindungen wirken jedoch nicht als Adjuvant und schränken daher den Spielraum für die Zugabe eines Adjuvants ein. Außerdem können diese Verbindungen den unerwünschten Effekt haben, dass sich die Viskosität der Formulierungen erhöht.

Die Adjuvantmischung bestehend aus Komponente b) und Komponente c) zeigt zudem eine synergistische Verstärkung der Wirkung der Pestizide ausgewählt aus der Substanzklasse N-Phosphonomethylglycin. Dies bedeutet, dass bei gleicher Adjuvantmenge eine Kombination aus den Komponenten b) und c) eine stärkere Wirkung zeigt als die gleiche Menge reines Adjuvant b) oder c).

In einer bevorzugten Ausführungsform der Erfindung ist das eine oder sind die mehreren Pestizide der Komponente a) ausgewählt aus Glyphosat, wobei die Glyphosat-Menge in den erfindungsgemäßen Zusammensetzungen von 80 bis 600 g/l, bezogen auf das Glyphosat-Säureäquivalent, beträgt. Diese Mengenangaben beziehen sich auf die gesamte erfindungsgemäße Zusammensetzung. Als Glyphosat bevorzugt sind hierbei wiederum wasserlösliche Salze des Glyphosats.

In einer weiteren bevorzugten Ausführungsform der Erfindung beträgt die Summe der Mengen der Komponenten b) und c) in den erfindungsgemäßen Zusammensetzungen von 20 bis 250 g/l und bevorzugt von 50 bis 200 g/l. Diese Mengenangaben beziehen sich auf die gesamte erfindungsgemäße Zusammensetzung.

In einer weiteren bevorzugten Ausführungsform der Erfindung beträgt das Gewichtsverhältnis der einen oder mehreren Verbindungen der Komponente b) zu der einen oder mehreren Verbindungen der Komponente c) von 80 zu 20 bis 20 zu 80.

Der Gehalt an Pestiziden und den oben genannten Adjuvantmischungen aus den Komponenten b) und c) in den erfindungsgemäßen Pestizidzubereitungen kann innerhalb großer Grenzen variieren.

In einer weiteren bevorzugten Ausführungsform der Erfindung liegen die Zusammensetzungen als Konzentrat-Formulierungen, die vor dem Gebrauch verdünnt werden, insbesondere mit Wasser, (beispielsweise "ready-to-use"-, "in-can"- oder "built-in"-Formulierungen), vor und enthalten das eine oder die mehreren Pestizide der Komponente a) in Mengen von 5 bis 80 Gew.-%, bevorzugt von 20 bis 60 Gew.-% und besonders bevorzugt von 30 bis 57 Gew.-% und die Adjuvantmischung aus den Komponenten b) und c) in Mengen von 1 bis 50 Gew.-%, bevorzugt von 3 bis 30 Gew.-% und besonders bevorzugt von 5 bis 20 Gew.-%. Diese Mengenangaben beziehen sich auf die gesamte Konzentrat-Formulierung.

Die Konzentrat-Formulierungen sind auch bei Temperaturbelastung bei 20 bis 55 °C, bevorzugt bei 5 bis 70 °C und besonders bevorzugt bei 0 bis 80 °C phasenstabil.

Die Zubereitungen werden In Form von Spritzbrühen auf die Felder ausgebracht. Dabei wird die Spritzbrühe durch Verdünnung der Konzentrat-Formulierung mit einer definierten Menge Wasser hergestellt.

In einer weiteren bevorzugten Ausführungsform der Erfindung liegt die Zusammen-setzung als Spritzbrühe vor und enthält von 0,001 bis 10 Gew.-%, bevorzugt von 0,02 bis 3 Gew.-% und besonders bevorzugt von 0,025 bis 2 Gew.-% Pestizid der Kompo-nente a) und von 0,001 bis 3 Gew.-%, bevorzugt von 0,005 bis 1 Gew.-% und beson-ders bevorzugt von 0,01 bis 0,5 Gew.-% Adjuvantmischung aus den Komponenten b) und c). Die genannten Mengenangaben beziehen sich auf die gesamte Spritzbrühe.

Das Gewichtsverhältnis Adjuvantmischung aus den Komponenten b) und c) zu Pestizid der Komponente a) in der Spritzbrühe ist vorzugsweise von 1:100 bis 10:1, besonders bevorzugt von 1:20 bis 2:1 und insbesondere bevorzugt von 1:12 bis 1:2.

Ein großer anwendungstechnischer Vorteil ist die hohe Salzstabilität der erfindungsgemäßen Zubereitungen im wässrigen Medium, auch bei hoher Pestizid-Konzentration und Salzkonzentration, ausgedrückt durch das klare Erscheinungsbild dieser Formulierungen mit Trübungspunkten oberhalb 55 °C.

Die erfindungsgemäßen Zubereitungen können Verdickungsmittel, Lösungsmittel, Dispergiermittel, Emulgatoren, Konservierungsmittel, weitere Adjuvants, Bindemittel, Verdünner, Sprengmittel, Netzmittel, Kältestabilisatoren und Entschäumer enthalten.

Als Verdickungsmittel können Xanthan gum und/oder Cellulose, beispielsweise Carboxy-, Methyl-, Ethyl- oder Propylcellulose oder (gegebenenfalls modifizierte) Bentonite in den Gewichtsmengen von 0,01 bis 5 %, bezogen auf das fertige Mittel, eingesetzt werden. Als Lösungsmittel eignen sich beispielsweise N-Methylpyrrolidon, Butyrolacton, Milchsäureester wie Ethylhexyllactat, Ester der Kohlensäure wie Propylencarbonat, Fettsäureamide wie Decansäuredimethylamid, Ester der phosphorigen Säure oder der Phosphorsäure wie Tris(ethylhexyl)phosphat, Glykole, Polyethylenglykole, Propylenglykol, tierische und mineralische Öle. Als Dispergiermittel und Emulgatoren eignen sich nichtionische, amphotere, kationische und anionische Tenside. Als Konservierungsmittel können organische Säuren und ihre Ester, beispielsweise Ascorbinsäure, Ascorbinpalmitat, Sorbat, Benzoesäure, Methyl- und Propyl-4-hydroxybenzoat, Propionate, Phenol, beispielsweise 2-Phenylphenat, 1,2-Benzisothiazolin-3-on, Formaldehyd, schwefelige Säure und deren Salze eingesetzt werden. Weitere Adjuvants können Polyglycerinester, Alkoholalkoxylate wie z. B. Alkoholethoxylate, Alkylpolysacharide, Fettaminethoxylate, Sorbitan- und Sorbitolethoxylatderivate und Derivate der Alk(en)ylbernsteinsäure sein.

Für feste Formulierungen kommen als Bindemittel Polyvinylpyrrolidon, Polyvinylalkohol, Carboxymethylcellulose, Zucker, beispielsweise Sucrose, Sorbitol oder Stärke in Betracht. Als Verdünner, Absorber oder Träger eignen sich Carbon Black, Talg, Kaolin, Aluminium-, Calcium- oder Magnesiumstearat, Natriumtripolyphosphat, Natriumtetraborat, Natriumsulphat, Silikate und Natriumbenzoat. Als Sprengmittel wirken Cellulose, beispielsweise Carboxymethylcellulose, Polyvinylpyrrolidon, Natrium- oder Kaliumacetat, Carbonate, Bicarbonate, Sesquicarbonate, Ammoniumsulphat oder Kaliumhydrogenphosphat.

Als Netzmittel können Alkoholethoxylate/-propoxylate verwendet werden. Als Kältestabilisatoren können alle üblichen für diesen Zweck einsetzbaren Stoffe fungieren. Beispielhaft seien Harnstoff, Glycerin und Propylenglykol genannt. Als Entschäumer eignen sich Fettsäurealkylesteralkoxylate; Organopolysiloxane wie Polydimethylsiloxane und deren Gemische mit mikrofeiner, gegebenenfalls silanierter Kieselsäure; Perfluoralkylphosphonate und -phosphinate; Paraffine; Wachse und Mikrokristallinwachse und deren Gemische mit silanierter Kieselsäure. Vorteilhaft sind auch Gemische verschiedener Schauminhibitoren, beispielsweise solche aus Silikonöl, Paraffinöl und/oder Wachsen.

Die erfindungsgemäßen Zusammensetzungen können darüber hinaus ein oder mehrere agrochemische Salze, bevorzugt Ammonium- oder Kaliumsalze, beispielsweise Kaliumnitrat, Kaliumphosphat, Kaliumhydrogenphosphat, Kaliumdihydrogenphosphat oder Kaliumlactat enthalten. Die erfindungsgemäßen Zusammensetzungen können nach den üblichen Methoden angewandt werden. Wässrige Konzentrate und feste Formulierungen werden vor dem Ausbringen mit der entsprechenden Menge an Wasser verdünnt.

Pro Hektar werden Pestizidmengen üblicherweise im Bereich von 0,05 bis 5 kg ausgebracht. Der Anteil der Adjuvantmischung bestehend aus den Verbindungen ausgewählt aus den Komponenten b) und c) liegt im Bereich von vorzugsweise 0,002 bis ca. 1,0 kg/ha. Das Volumen der für die Aussprühung erstellten Pestizidformulierung liegt bevorzugt im Bereich von 50 bis 1000 l/ha.

Die Erfindung betrifft weiterhin die Verwendung einer erfindungsgemäßen Zusammensetzung zur Kontrolle und/oder Bekämpfung von Unkraut, Pilzerkrankungen oder Insektenbefall. Bevorzugt ist die Verwendung der Zubereitung zur Kontrolle und/oder Bekämpfung von Unkraut.

Diese Verwendungen können vorzugsweise auch im sogenannten Tank-mix-Verfahren stattfinden. Hierbei können also das oder die Pestizide und die Adjuvantmischung, bestehend aus einer oder mehreren Verbindungen der Komponente b) und einer oder mehreren Verbindungen der Komponente c) sowie das Wasser auch in Form einer sogenannten "Tank-mix"- Zubereitung vorliegen. In einer derartigen Zubereitung liegen sowohl das oder die Pestizide als auch die Adjuvantmischung getrennt voneinander vor. Beide Zubereitungen werden vor der Ausbringung, in der Regel kurz vorher, miteinander vermischt, wobei eine erfindungsgemäße Zubereitung entsteht.

Im "Tank-mix"-Verfahren liegt das Pestizid vor der Vermischung als Formulierung in Wasser und/oder in einem organischen Lösungsmittel oder als feste Formulierung vor.

Im "Tank-mix"-Verfahren liegt die Adjuvantmischung vor der Vermischung bevorzugt gelöst in Wasser oder in einem Lösungsmittelgemisch aus Wasser und Polyethylenglykol, Propylenglykol oder Glycerin vor.

### Beispiele

Im Folgenden wird die Erfindung anhand von Beispielen verdeutlicht, die jedoch keinesfalls als Einschränkung anzusehen sind.

### Beispiel 1

Verschiedene Pestizidzubereitungen (siehe Tabelle 1) werden durch Mischen einer handelsüblichen wässrigen Lösung von Glyphosat-Isopropylammonium (mit 62 Gew.-% Wirkstoff) mit den Komponenten b) und c) sowie Wasser und gegebenenfalls Propylenglykol auf eine Konzentration von 360 g/l a.e. (a.e.: Säureequivalent Glyphosat) eingestellt.

Von den auf diese Weise hergestellten Glyphosat-Formulierungen werden der Trübungspunkt sowie die Viskosität bestimmt.

**Tabelle 1 Glyphosat-Formulierungen**

| Formulierung | | 1 (Vergleich) | 2 (Vergleich) | 3 (Erfindung) |
|---|---|---|---|---|
| Glyphosat-IPA Salz (62 Gew.-%) | [g] | 78,4 | 78,4 | 78,4 |
| Komponente b) | [g] | 9,0 | 9,0 | 7,9 |
| Komponente c) | [g] | - | - | 2,4 |
| Propylenglykol | [g] | - | 3,0 | - |
| Wasser | [g] | 28,5 | 25,5 | 27,2 |
| Trübungspunkt | [°C] | 56 | 78 | > 90 |
| Viskosität bei 5°C | [mPa·s] | 40 | 60 | 35 |

Komponente b) = Synergen^{®} GL 5 (Copolymer bestehend aus Glycerin, Kokosfettsäure und Phthalsäure; Produkt der Firma Clariant), 70 Gew.-%ige Lösung in Wasser.

Komponente c) = Cocoamido-N-[3-(dimethylamino)propyl], N-oxid, 30 Gew.-%ige Lösung in Wasser.

Formulierung 1 enthält lediglich Komponente b) als Adjuvant. Die Formulierung weist einen Trübungspunkt von lediglich 56 °C auf, eine solche Formulierung besitzt keine ausreichende Lagerstabilität.

Formulierung 2 enthält zusätzlich zu der Komponente b) Propylenglykol, um die Formulierung zu stabilisieren und den Trübungspunkt zu erhöhen. Dies gelingt in einem gewissen Umfang (Anstieg Trübungspunkt von 56 °C auf 78 °C), gleichzeitig nimmt aber die Viskosität von 40 mPa·s auf 60 mPa·s zu.

In der erfindungsgemäßen Formulierung 3 wurde ein Teil der Komponente b) durch die Komponente c) ersetzt. Die Gesamtadjuvant-Menge (bezogen auf den Aktivgehalt) bleibt gleich. Die Stabilität der Formulierung nimmt deutlich zu (der Trübungspunkt steigt von 56 °C auf > 90 °C an), zusätzlich reduziert sich die Viskosität von 40 auf 35 mPa·s.

## Patentansprüche

1. Zusammensetzung enthaltend
a) ein oder mehrere Pestizide, wobei mindestens ein Pestizid ausgewählt ist aus der Substanzklasse N-Phosphonomethylglycin (Glyphosat),
b) ein oder mehrere Copolymere, erhältlich durch Copolymerisation von
i) Glycerin,
ii) mindestens einer Dicarbonsäure und
iii) mindestens einer Monocarbonsäure,
c) ein oder mehrere amphotere oberflächenaktive Substanzen und
d) Wasser,
**dadurch gekennzeichnet, dass** das Gewichtsverhältnis der einen oder mehreren Verbindungen der Komponente b) zu der einen oder mehreren Verbindungen der Komponente c) von 95 zu 5 bis 5 zu 95 beträgt.

2. Zusammensetzung gemäß Anspruch 1, **dadurch gekennzeichnet, dass** das eine oder die mehreren Pestizide der Komponente a) ausgewählt sind aus wasserlöslichen Salzen des N-Phosponomethyl-glycins (Glyphosats).

3. Zusammensetzung gemäß Anspruch 1 oder 2, **dadurch gekennzeichnet, dass** das eine oder die mehreren Copolymere der Komponente b) ausgewählt sind aus Copolymeren, die erhältlich sind durch Copolymerisation von
i) Glycerin,
ii) mindestens einer Dicarbonsäure und
iii) mindestens einer Monocarbonsäure gemäß Formel (I)
R¹-COOH (I),
wobei R¹ (C₅-C₂₉)-Alkyl; (C₇-C₂₉)-Alkenyl; Phenyl oder Naphthyl ist, und 19,9 bis 99 Gew.-% der Komponente i), 0,1 bis 30 Gew.-% der Komponente ii) und 0,9 bis 80 Gew.-% der Komponente iii) enthalten.

4. Zusammensetzung gemäß einem oder mehreren der Ansprüche 1 bis 3, **dadurch gekennzeichnet, dass** die eine oder die mehreren amphoteren oberflächenaktiven Substanzen der Komponente c) ausgewählt sind aus den Formeln (II) bis (V)
iv) Alkylbetain der Formel (II)
R¹R²R³N⁺-CH₂-COO⁻ (II)
wobei R¹ eine lineare oder verzweigte Alkylgruppe mit 3 bis 30 Kohlenstoffatomen oder eine Mischung daraus ist, R² und R³ gleich oder verschieden sein können und Wasserstoff, eine Alkylgruppe mit 1 bis 10 Kohlenstoffatomen oder eine Gruppe der Formel (C₂H₄O)ₚH bedeuten und p eine Zahl von 1 bis 10 ist,
v) Alkyl(amidoalkyl)-betain der Formel (III)
R¹-CONH-(CH₂)ₙN⁺R²R³-CH₂-COO⁻ (III)
wobei R¹ eine lineare oder verzweigte Alkylgruppe mit 3 bis 30 Kohlenstoffatomen oder eine Mischung daraus ist, R² und R³ gleich oder verschieden sein können und Wasserstoff, eine Alkylgruppe mit 1 bis 10 Kohlenstoffatomen oder eine Gruppe der Formel (C₂H₄O)ₚH bedeuten und n und p Zahlen von 1 bis 10 sind,
vi) Aminoxid der Formel (IV)
R¹NR²R³⁺-O⁻ (IV)
wobei R¹ eine lineare oder verzweigte Alkylgruppe mit 3 bis 30 Kohlenstoffatomen oder eine Mischung daraus ist, R² und R³ gleich oder verschieden sein können und Wasserstoff, eine Alkylgruppe mit 1 bis 10 Kohlenstoffatomen oder eine Gruppe der Formel (C₂H₄O)pH bedeuten und p eine Zahl von 1 bis 10 ist,
vii) Aminoxid der Formel (V)
R¹-CONH-(CH₂)ₙNR²R³⁺-O⁻ M (V)
wobei R¹ eine lineare oder verzweigte Alkylgruppe mit 3 bis 30 Kohlenstoffatomen oder eine Mischung daraus ist, R² und R³ gleich oder verschieden sein können und Wasserstoff, eine Alkylgruppe mit 1 bis 10 Kohlenstoffatomen oder eine Gruppe der Formel (C₂H₄O)ₚH bedeuten und n und p Zahlen von 1 bis 10 sind.

5. Zusammensetzung gemäß einem oder mehreren der Ansprüche 1 bis 4, **dadurch gekennzeichnet, dass** das eine oder die mehreren Pestizide der Komponente a) ausgewählt sind aus Glyphosat, vorzugsweise ausgewählt sind aus wasserlöslichen Salzen des Glyphosats, und die Glyphosat-Menge in der Zusammensetzung von 80 bis 600 g/l, bezogen auf das Glyphosat-Säureäquivalent, beträgt.

6. Zusammensetzung gemäß einem oder mehreren der Ansprüche 1 bis 5, **dadurch gekennzeichnet, dass** die Summe der Mengen der Komponenten b) und c) von 20 bis 250 g/l und bevorzugt von 50 bis 200 g/l beträgt.

7. Zusammensetzung gemäß einem oder mehreren der Ansprüche 1 bis 6, **dadurch gekennzeichnet, dass** das Gewichtsverhältnis der einen oder mehreren Verbindungen der Komponente b) zu der einen oder mehreren Verbindungen der Komponente c) von 80 zu 20 bis 20 zu 80 beträgt.

8. Zusammensetzung gemäß einem oder mehreren der Ansprüche 1 bis 4 und 7, **dadurch gekennzeichnet, dass** sie als Konzentrat-Formulierung, die vor dem Gebrauch verdünnt wird, vorliegt, und 5 bis 80 Gew.-%, bevorzugt 20 bis 60 Gew.-% und besonders bevorzugt 30 bis 57 Gew.-% Pestizid der Komponente a) und eine Gesamtmenge an Verbindungen ausgewählt aus den Komponenten b) und c) von 1 bis 50 Gew.-%, bevorzugt von 3 bis 30 Gew.-% und besonders bevorzugt von 5 bis 20 Gew.-% enthält.

9. Zusammensetzung gemäß einem oder mehreren der Ansprüche 1 bis 4 und 7, **dadurch gekennzeichnet, dass** sie als Spritzbrühe vorliegt und von 0,001 bis 10 Gew.-%, bevorzugt von 0,02 bis 3 Gew.-% und besonders bevorzugt von 0,025 bis 2 Gew.-% Pestizid der Komponente a) und eine Gesamtmenge an Verbindungen ausgewählt aus den Komponenten b) und c) von 0,001 bis 3 Gew.-%, bevorzugt von 0,005 bis 1 Gew.-% und besonders bevorzugt von 0,01 bis 0,5 Gew.-% enthält.

10. Zusammensetzung gemäß einem oder mehreren der Ansprüche 1 bis 9, **dadurch gekennzeichnet, dass** sie ein oder mehrere agrochemische Salze ausgewählt aus der Gruppe bestehend aus Ammonium- und Kaliumsalzen enthält.

11. Verwendung einer Zusammensetzung nach einem oder mehreren der Ansprüche 1 bis 10 zur Kontrolle und/oder Bekämpfung von Unkraut, Pilzerkrankungen oder Insektenbefall, vorzugsweise zur Kontrolle und/oder Bekämpfung von Unkraut.

12. Verwendung gemäß Anspruch 11 im Tank-mix-Verfahren.

## Claims

1. A composition comprising
a) one or more pesticides, where at least one pesticide is selected from N-phosphonomethyl-glycine substance class (glyphosate),
b) one or more copolymers obtainable by copolymerizing
i) glycerol,
ii) at least one dicarboxylic acid, and
iii) at least one monocarboxylic acid,
c) one or more amphoteric surface-active substances, and
d) water,
wherein the weight ratio of the one or more compounds of component b) to the one or more compounds of component c) is from 95:5 to 5:95.

2. A composition as claimed in claim 1, wherein the one or more pesticides of component a) are selected from water-soluble salts of N-phosphonomethyl-glycine (glyphosate).

3. A composition as claimed in claim 1 or 2, wherein the one or more copolymers of component b) are selected from copolymers obtainable by copolymerizing
i) glycerol,
ii) at least one dicarboxylic acid, and
iii) at least one monocarboxylic acid of formula (I)
R¹-COOH (I),
where R¹ is (C₅-C₂₉)-alkyl; (C₇-C₂₉) -alkenyl; phenyl or naphthyl, and comprise 19.9% to 99% by weight of component i), 0.1% to 30% by weight of component ii), and 0.9% to 80% by weight of component iii).

4. A composition as claimed in one or more of claims 1 to 3, wherein the one or more amphoteric surface-active substances of component c) are selected from the formulae (II) to (V)
iv) alkylbetaine of the formula (II)
R¹R²R³N⁺-CH₂-COO⁻ (II)
where R¹ is a linear or branched alkyl group having 3 to 30 carbon atoms or a mixture thereof, R² and R³ may be identical or different and are hydrogen, an alkyl group having 1 to 10 carbon atoms or a group of the formula (C₂H₉O)ₚH, and p is a number from 1 to 10,
v) alkyl(amidoalkyl)-betaine of the formula (III)
R¹-CONH-(CH₂)ₙN+R²R³-CH₂-COO (III)
where R¹ is a linear or branched alkyl group having 3 to 30 carbon atoms or a mixture thereof, R² and R³ may be identical or different and are hydrogen, an alkyl group having 1 to 10 carbon atoms or a group of the formula (C₂H₄O)ₚH, and n and p are numbers from 1 to 10,
vi) amine oxide of the formula (IV)
R¹NR²R³⁺-O⁻ (IV)
where R¹ is a linear or branched alkyl group having 3 to 30 carbon atoms or a mixture thereof, R² and R³ may be identical or different and are hydrogen, an alkyl group having 1 to 10 carbon atoms or a group of the formula (C₂H₄O)ₚH, and p is a number from 1 to 10,
vii) amine oxide of the formula (V)
R¹-CONH- (CH₂)ₙNR²R³⁺-O⁻ (V)
where R¹ is a linear or branched alkyl group having 3 to 30 carbon atoms or a mixture thereof, R² and R³ may be identical or different and are hydrogen, an alkyl group having 1 to 10 carbon atoms or a group of the formula (C₂H₄O)ₚH, and n and p are numbers from 1 to 10.

5. A composition as claimed in one or more of claims 1 to 4, wherein the one or more pesticides of component a) are selected from glyphosate, preferably selected from water-soluble salts of glyphosate, and the amount of glyphosate in the composition is from 80 to 600 g/l, based on the glyphosate acid equivalent.

6. A composition as claimed in one or more of claims 1 to 5, wherein the sum of the amounts of components b) and c) is from 20 to 250 g/l and preferably from 50 to 200 g/l.

7. A composition as claimed in one or more of claims 1 to 6, wherein the weight ratio of the one or more compounds of component b) to the one or more compounds of component c) is from 80:20 to 20:80.

8. A composition as claimed in one or more of claims 1 to 4 and 7, which is present in the form of a concentrate formulation which is diluted prior to use, and comprises 5% to 80% by weight, preferably 20% to 60% by weight, and more preferably 30% to 57% by weight of pesticide of component a) and a total amount of compounds selected from components b) and c) of 1% to 50% by weight, preferably of 3% to 30% by weight, and more preferably of 5% to 20% by weight.

9. A composition as claimed in one or more of claims 1 to 4 and 7, which is present in the form of a spray liquor, and comprises 0.001% to 10% by weight, preferably 0.02% to 3% by weight, and more preferably 0.025% to 2% by weight of pesticide of component a) and a total amount of compounds selected from components b) and c) of 0.001% to 3% by weight, preferably of 0.005% to 1% by weight, and more preferably of 0.01% to 0.5% by weight.

10. A composition as claimed in one or more of claims 1 to 9, which comprises one or more agrochemical salts, selected from the group consisting of ammonium salts and potassium salts.

11. The use of a composition as claimed in one or more of claims 1 to 10 for the checking and/or control of weeds, fungal diseases or insect infestation, preferably for the checking and/or control of weeds.

12. The use as claimed in claim 11 in a tank-mix method.

## Revendications

1. Composition contenant
a) un ou plusieurs pesticides, au moins un pesticide étant choisi dans la classe de substances de la N-phosphonométhylglycine (glyphosate),
b) un ou plusieurs copolymères, pouvant être obtenus par copolymérisation de
i) glycérol,
ii) au moins un acide dicarboxylique et
iii) au moins un acide monocarboxylique,
c) une ou plusieurs substances tensioactives amphotères et
d) de l'eau,
**caractérisée en ce que** le rapport pondéral dudit un ou desdits plusieurs composés du composant b) audit un ou auxdits plusieurs composés du composant c) vaut 95:5 à 5:95.

2. Composition selon la revendication 1, **caractérisée en ce que** ledit un ou lesdits plusieurs pesticides du composant a) sont choisis parmi les sels solubles dans l'eau de la N-phosphonométhylglycine (glyphosate).

3. Composition selon la revendication 1 ou 2, **caractérisée en ce que** ledit un ou lesdits plusieurs copolymères du composant b) sont choisis parmi les copolymères qui peuvent être obtenus par copolymérisation de
i) glycérol,
ii) au moins un acide dicarboxylique et
iii) au moins un acide monocarboxylique selon la formule (I)
R¹-COOH (I),
dans laquelle R¹ représente (C₅-C₂₉)-alkyle; (C₇-C₂₉)-alcényle, phényle ou naphtyle, et
qui contiennent 19,9 à 99% en poids du composant i), 0,1 à 30% en poids du composant ii) et 0,9 à 80% en poids du composant iii).

4. Composition selon l'une ou plusieurs des revendications 1 à 3, **caractérisée en ce que** ladite une ou lesdites plusieurs substances tensioactives amphotères du composant c) sont choisies parmi les formules (II) à (V)
iv) alkylbétaïne de formule (II)
R¹R²R³N⁺-CH₂-COO⁻ (II)
dans laquelle R¹ représente un groupe alkyle linéaire ou ramifié comprenant 3 à 30 atomes de carbone ou un mélange de ceux-ci, R² et R³ peuvent être identiques ou différents et signifient hydrogène, un groupe alkyle comprenant 1 à 10 atomes de carbone ou un groupe de formule (C₂H₄O)ₚH et p vaut un nombre de 1 à 10,
v) alkyl(amidoalkyl)-bétaïne de formule (III)
R¹-CONH- (CH₂)ₙN⁺R²R³-CH₂-COO⁻ (III)
dans laquelle R¹ représente un groupe alkyle linéaire ou ramifié comprenant 3 à 30 atomes de carbone ou un mélange de ceux-ci, R² et R³ peuvent être identiques ou différents et signifient hydrogène, un groupe alkyle comprenant 1 à 10 atomes de carbone ou un groupe de formule (C₂H₄O)ₚH et n et p valent un nombre de 1 à 10,
vi) oxyde d'amine de formule (IV)
R¹NR^{a}R³⁺-O⁻ ( IV)
dans laquelle R¹ représente un groupe alkyle linéaire ou ramifié comprenant 3 à 30 atomes de carbone ou un mélange de ceux-ci, R² et R³ peuvent être identiques ou différents et signifient hydrogène, un groupe alkyle comprenant 1 à 10 atomes de carbone ou un groupe de formule (C₂H₄O)ₚH et p vaut un nombre de 1 à 10,
vii) oxyde d'amine de formule (V)
R¹-CONH- (CH₂)ₙNR²R³⁺-O⁻ (V)
dans laquelle R¹ représente un groupe alkyle linéaire ou ramifié comprenant 3 à 30 atomes de carbone ou un mélange de ceux-ci, R² et R³ peuvent être identiques ou différents et signifient hydrogène, un groupe alkyle comprenant 1 à 10 atomes de carbone ou un groupe de formule (C₂H₄O)ₚH et n et p valent un nombre de 1 à 10.

5. Composition selon l'une ou plusieurs des revendications 1 à 4, **caractérisée en ce que** ledit un ou lesdits plusieurs pesticides du composant a) sont choisis parmi le glyphosate, de préférence parmi les sels solubles du glyphosate, et la quantité de glyphosate dans la composition est de 80 à 600 g/l, par rapport à l'équivalent acide de glyphosate.

6. Composition selon l'une ou plusieurs des revendications 1 à 5, **caractérisée en ce que** la somme des quantités des composants b) et c) vaut 20 à 250 g/l, de préférence de 50 à 200 g/l.

7. Composition selon l'une ou plusieurs des revendications 1 à 6, **caractérisée en ce que** le rapport pondéral dudit un ou desdits plusieurs composés du composant b) audit un ou auxdits plusieurs composés du composant c) vaut 80:20 à 20:80.

8. Composition selon l'une ou plusieurs des revendications 1 à 4 et 7, **caractérisée en ce qu'**elle se trouve sous forme de formulation de concentrat qui est diluée avant l'utilisation et qui contient 5 à 80% en poids, de préférence 20 à 60% en poids et de manière particulièrement préférée 30 à 57% en poids de pesticide du composant a) et une quantité totale de composés choisis parmi les composants b) et c) de 1 à 50% en poids, de préférence de 3 à 30% en poids et de manière particulièrement préférée de 5 à 20% en poids.

9. Composition selon l'une ou plusieurs des revendications 1 à 4 et 7, **caractérisée en ce qu'**elle se trouve sous forme de bouillon de pulvérisation et contient 0,001 à 10% en poids, de préférence 0,02 à 3% en poids et de manière particulièrement préférée 0,025 à 2% en poids de pesticide du composant a) et une quantité totale de composés choisis parmi les composants b) et c) de 0,001 à 3% en poids, de préférence de 0,005 à 1% en poids et de manière particulièrement préférée de 0,01 à 0,5% en poids.

10. Composition selon l'une ou plusieurs des revendications 1 à 9, **caractérisée en ce qu'**elle contient un ou plusieurs sels agrochimiques choisis dans le groupe constitué par les sels d'ammonium et de potassium.

11. Utilisation d'une composition selon l'une ou plusieurs des revendications 1 à 10 pour réguler et/ou lutter contre les mauvaises herbes, les maladies fongiques ou l'attaque par les insectes, de préférence pour la régulation et/ou la lutte contre les mauvaises herbes.

12. Utilisation du procédé selon la revendication 11 dans un procédé par mélange dans le réservoir.
